Europäisches Patentamt

European Patent Office

Office européen des brevets

(19)

(11) EP 0 569 694 B1

(12) # EUROPÄISCHE PATENTSCHRIFT

(45) Veröffentlichungstag und Bekanntmachung des Hinweises auf die Patenterteilung:
**26.08.1998 Patentblatt 1998/35**

(51) Int Cl.⁶: **G01B 21/04**, G01B 7/00

(21) Anmeldenummer: **93105219.5**

(22) Anmeldetag: **30.03.1993**

(54) **Verfahren und Gerät zur Messung von Formelementen auf einem Koordinatenmessgerät**

Method and apparatus for measuring elements on a coordinate measuring apparatus

Procédé et appareil de mesure des éléments sur un appareil de mesure de coordonnées

(84) Benannte Vertragsstaaten:
**DE FR GB IT NL**

(30) Priorität: **14.04.1992 DE 4212455**

(43) Veröffentlichungstag der Anmeldung:
**18.11.1993 Patentblatt 1993/46**

(73) Patentinhaber:
- **Carl Zeiss**
  **D-89518 Heidenheim (Brenz) (DE)**
  Benannte Vertragsstaaten:
  **DE FR IT NL**
- **CARL-ZEISS-STIFTUNG, trading as CARL ZEISS**
  **89518 Heidenheim (DE)**
  Benannte Vertragsstaaten:
  **GB**

(72) Erfinder:
- **Breyer, Karl-Hermann, Dr.**
  **W-7920 Heidenheim (DE)**
- **Kammleiter, Berndt**
  **W-7082 Oberkochen (DE)**
- **Ruck, Otto**
  **W-7090 Pfahlheim (DE)**

(56) Entgegenhaltungen:
EP-A- 0 211 202     DE-A- 3 210 711
GB-A- 2 069 142

- TECHNISCHES MESSEN, Bd.54, Nr.7-8, 1987, MüNCHEN,DE Seiten 277 - 284 A. WECKENMANN ET AL 'Prüfen von Werkstücken mit gekrümmten Flächen auf koordinatenmessgeräten'
- PATENT ABSTRACTS OF JAPAN vol. 14, no. 385 (P-1094) 20. August 1990 & JP-A-02 145 908 (OKUMA MACH WORKS LTD.)
- Bericht aus dem ISW Forschung & Praxis, Band 64,1987, "Steuerung von Koordinatenmessgeräten".
- Bericht Nr.32 "Beitrag zur Erhöhung der Messgenauigkeit und -geschwindigkeit eines Mehrkoordinatentasters" von Edgar Zürn, 1989 Universität Stuttgart.

**Beschreibung**

Die Erfindung betrifft ein Verfahren zur Messung von Formelementen beliebiger räumlicher Orientierung an Werkstücken auf einem Koordinatenmeßgerät mit einem messenden Tastkopf und zwar ein sogenanntes "Scanning"-Verfahren, bei dem der Taststift des Tastkopfes im Zuge seiner Abtastbewegung in permanentem Kontakt mit der Werkstückoberfläche bleibt. Solche Scanning-Verfahren erlauben es, schnell eine Vielzahl von Meßpunkten aufzunehmen, die die Form des Werkstücks beschreiben. Hierfür wird allerdings ein sogenannter messender Tastkopf benötigt, d.h. ein Tastkopf der Meßwertgeber besitzt, die ein dem Betrag der Tasterauslenkung in den Koordinatenrichtungen proportionales Signal abgeben.

"Scanning"-Verfahren unter Verwendung von messenden Tastköpfen sind an sich bereits bekannt und beispielsweise in der DE-PS 29 21 166 und der US-PS 47 69 763 beschrieben.

Bei dem in der DE 29 21 166 beschriebenen bekannten Verfahren wird der Tastkopf des Koordinatenmeßgerätes nach dem Antasten des Werkstücks mit konstanter Geschwindigkeit entlang einer ersten, der sogenannten Primärkoordinate verfahren bzw. gesteuert. Gleichzeitig wird er durch ein Signal der Meßwertgeber im Tastkopf entsprechend der Tasterauslenkung in einer zur Primärachse senkrechten, zweiten Richtung auf konstanter Anlage mit dem Werkstück geregelt. Sobald die Geschwindigkeit der Nachregelbewegung größer wird als der gesteuerte Vorschub in der Primärkoordinate, werden die beiden Achsen miteinander vertauscht. Auf diese Weise folgt der Tastkopf selbstätig Konturen am Werkstück, die nicht vorbekannt sein müssen. Auch das in der US-PS 4,769,763 beschriebene Verfahren erlaubt das selbsttätige Abfahren unbekannter Werkstückkonturen, indem dort der Absolutwert der Abtastgeschwindigkeit und die gewünschte Tasterauslenkung vorgegeben werden und aus der gemessenen Tasterauslenkung permanent die tangential zur Werkstückoberfläche verlaufende Richtung der Abtastbewegung nachberechnet wird.

Es ist für beide bekannte Verfahren charakteristisch, daß die Meßwertgeber des Tastkopfs in einen Regelkreis eingebunden sind und die Vorschubrichtung entsprechend dieser Signale stets nachgeregelt wird. Aus diesem Grunde sind beide Verfahren relativ langsam.

Aus der internationalen Patentanmeldung WO 90/07097 ist ein "Scanning"-Verfahren bekannt, mit dem schnell eine Vielzahl von Meßpunkten an flächigen Werkstückgeometrien aufgenommen werden sollen. Hierzu ist der Taststift des Koordinatenmeßgerätes an einem sogenannten "messenden Dreh-Schwenk-Gelenk" befestigt. Das Koordinatenmeßgerät verfährt das Dreh-Schwenk-Gelenk mit konstanter Geschwindigkeit auf einer Bahn mit einfacher Geometrie, beispielsweise einer Geraden oder einem Kreis und gleichzeitig wird der Taststift mit Hilfe der Antriebe des Dreh-Schwenk-Gelenks im wesentlichen senkrecht zur Verfahrrichtung mit konstanter Kraft an das Werkstück angelegt und in eine spiralförmige oder oszillierende Bewegung versetzt. Mit diesem Verfahren können nur sehr wenige Formelemente einer bestimmten vorgegebenen Geometrie vermessen werden. Auch ist es nicht möglich, Formelemente in beliebiger räumlicher Orientierung abzutasten, da das Dreh-Schwenk-Gelenk bereits eine gewisse Vororientierung der Formelemente verlangt.

Der Bericht "Steuerung von Koordinatenmeßgeräten mit schaltenden und messenden Tastsystemen", von Eberhard Wagner - ISW Forschung und Praxis - Berichte aus dem Institut für Steuerungstechnik der Werkzeugmaschinen und Fertigungseinrichtungen der Universität Stuttgart, Herausgeber: Prof.Dr.-Ing. G. Pritschow, Band 64, erschienen 1987 im Springer Verlag Berlin, Heidelberg, New York, Tokyo sind unterschiedliche Verfahren zum kontinuierlichen Abtasten eines Werkstückes beschrieben.

In einer ersten Ausführungsform, die in dem betreffenden Bericht als "nullachsiges Scannen" bezeichnet wird, wird der Taster bzw. der Tastkopf eines Meßgerätes entlang einer fest vorgegebenen Bahn über die Oberfläche eines zu vermessenden Werkstückes bewegt. Überschreitet der Taster eine vorgegebene Maximalauslenkung, so werden durch eine Kollisionsüberwachung in der Steuerung die Bewegungsvorgänge der Geräteachsen abgebrochen.

In anderen Ausführungsvarianten eines hierin beschriebenen Abtastverfahrens, die als "einachsiges Scannen" und als "zweiachsiges Scannen" bezeichnet werden, tastet der Taster eines entsprechenden Meßgerätes die Oberfläche eines zu vermessenden Werkstückes ab, wobei dem Meßgerät die konkrete Kontur des zu vermessenden Werkstückes unbekannt ist. Die Bahndaten zur Bewegung des Tastkopfes werden anhand der Auslenkung des Tasters durch eine Regelungseinrichtung ermittelt, sodaß die Kontur des zu vermessenden Werkstückes "ertastet" wird.

Vollkommen Analoges ist auch in dem Bericht "Beitrag zur Erhöhung der Meßgenauigkeit und -geschwindigkeit eines Mehrkoordinatentasters" von Edgar Zürn, Bericht Nr. 32, herausgegeben 1989 von der Universität Stuttgart, Institut für Maschinenelemente und Gestaltungslehre, Leiter des Instituts: Prof.Dr.-Ing. G. Lechner.

Auch hierin sind die beiden unterschiedlichen Meßverfahren zum kontinuierlichen Abtasten einer zu vermessenden Oberfläche eines Werkstückes beschrieben. Unter der Bezeichnung "Abtasten nach bekannten Solldaten" wird hierbei die Abtastung beschrieben, bei der der Taster bzw. der Tastkopf entsprechend einer fest vorgegebenen Bahn über die Werkstückoberfläche des zu vermessenden Werkstückes geführt wird.

Im Gegensatz hierzu wird unter der Überschrift "Abtasten ohne Vorgabe einer Sollraumkurve" das ebenfalls oben beschriebene Verfahren dargestellt, bei dem der Taster bzw. der Tastkopf über eine unbekannte Kontur des zu vermessenden Werkstückes geführt wird und sich das Meßgerät entsprechend der Tasterauslenkung und einer im Meßgerät vorgesehenen Regelungseinrichtung die Kontur des zu vermessenden Werkstückes "ertastet".

In dem Artikel "Prüfen von Werkstücken mit gekrümmten Flächen auf Koordinatenmeßgeräten" von A. Weckenmann und B. Gawande, erschienen 1987 in der Zeitschrift Technisches Messen tm, 54. Jahrgang, Heft 7, 8. Auch in dem besagten Aufsatz sind die beiden grundsätzlichen Möglichkeiten angegeben, entweder die Werkstückgestalt eines zu vermessenden Werkstückes zu ermitteln, für die die Angaben über deren Sollgestalt vorliegen oder Werkstücke abzutasten, deren Kontur dem Meßgerät nicht bekannt sind und die durch Vermessung des Werkstückes ermittelt werden sollen. Genauere Angaben, wie die Meßpunkte im einzelnen ermittelt werden können, sind dem betreffenden Aufsatz nicht zu entnehmen.

Es ist die Aufgabe der vorliegenden Erfindung, ein Verfahren zur kontinuierlichen Vermessung von Formelementen beliebiger räumlicher Orientierung zu schaffen, das eine Vielzahl von Meßpunkten bei möglichst kurzer Meßzeit aufzunehmen gestattet.

Diese Aufgabe wird durch die in Anspruch 1 bzw. 7 angegebenen Merkmale gelöst.

Die Erfindung geht von der Erkenntnis aus, daß es möglich ist, bedeutend schneller als bisher Formelemente wie z.B. Zylinderbohrungen, Paßflächen etc. an Werkstücken zu vermessen, wenn deren Geometrieform und deren Lage zumindest grob bekannt ist. Da jedoch in der Koordinatenmeßtechnik ohnehin ein Großteil der Meßaufgaben darin besteht, die Maßhaltigkeit von Teilen innerhalb vorgegebener Toleranzen zu überprüfen, sind die Sollwerte für die Lage und Geometrie (Kontur) der zu vermessenden Formelemente meist bekannt. Demzufolge können mit der Erfindung ein Großteil der in der Praxis vorkommenden Meßaufgaben erheblich schneller gelöst werden als bisher.

Wegen der hohen erzielbaren Meßgeschwindigkeit kann das Verfahren auch dort eingesetzt werden, wo bisher lediglich Einzelpunktmessungen vorgenommen wurden. Hier erreicht das neue Verfahren wegen der bei gleicher Meßzeit sehr viel höheren Punktedichte eine deutlich bessere Reproduzierbarkeit der Meßergebnisse, weil "Ausreißerpunkte" ohne Bedeutung sind und die Abhängigkeit von der Wahl "zufällig" gesetzter Antastpunkte wegfällt. Ebenfalls liefert das Verfahren aufgrund der hohen Punktedichte verbesserte Ergebnisse bei Formmessungen wie Rundheit, Zylinderform, Ebenheit, Geradheit sowie bei Lagemessungen wie z.B. Position und Symmetrie von Formelementen. Es lassen sich somit vom Rechner des Koordinatenmeßgerätes Einpassungsrechnungen (Hüll- und Pferchelemente-Auswertung) durchführen, die z.B. bei der Beurteilung von Rohteilen mit "rauher" Oberfläche wie Guß- und Schmiedestücke erst funktionsgerechte Meßergebnisse liefern.

Wesentlich für das Verfahren ist allerdings, daß die Bahn, anhand der die Tastkugel entsprechend den Sollwerten gesteuert wird, innerhalb einer durch den Meßbereich des Tastkopfes vorgegebenen Bandbreite von ca. 2mm mit der Ist-Geometrie des zu vermessenden Objekts übereinstimmt, bzw. keine größeren Differenzen auftreten. Es ist deshalb zweckmäßig, die Solllage des zu vermessenden Formelements vor dem Abfahren seiner Kontur durch Antasten weniger Punkte der Kontur zu verifizieren und die Bahndaten entsprechend dem Ergebnis der Verifizierung bei Bedarf anzupassen. Hiervon kann allerdings dann abgegangen werden, wenn während des Abfahrens der Kontur des Werkstücks die Stellung des Tasters im Meßbereich des Tastkopfes überwacht wird und ein kontinuierliches Auswandern des Tasters in Richtung auf den Rand des Meßbereichs durch Aufschalten einer Störgröße auf die Bahndaten kompensiert wird, die einem konstanten Versatz in entgegengesetzter Richtung entspricht.

Um den Fehlereinfluß von Verbiegungen des Taststifts aufgrund unterschiedlicher Meßkräfte während des Meßvorganges auszuschalten ist es zweckmäßig, den Betrag der resultierenden Meßkraft während des Meßvorganges entweder konstant zu halten oder an den Stellen, an denen Meßpunkte aufgenommen werden, zu ermitteln. Im letzteren Falle können aus Betrag und Richtung der Gesamtmeßkraft Korrekturwerte berechnet werden, die die Tasterbiegung nach Betrag und Richtung beschreiben und diese Korrekturwerte können bei der Berechnung der Ist-Kontur des Formelements mit berücksichtigt werden.

Da mit dem erfindungsgemäßen Verfahren bedeutend schneller gemessen wird und demzufolge auch die bewegten Maschinenteile sehr viel schneller verfahren werden, können unter Umständen Fehler aufgrund der dynamischen auf das gesamte Maschinengestell einwirkenden Beschleunigungskräfte auftreten. Es ist deshalb vorteilhaft, diese Beschleunigungskräfte und das zuvor z.B. experimentell bestimmte oder anhand von Modellen berechnete Biegeverhalten der verfahrbaren Teile des Koordinatenmeßgerätes in die Berechnung der Ist-Kontur des Formelements mit einzubeziehen.

Das Verfahren ist nicht nur mit einem Tastkopf durchführbar, der aktive Meßkraftgeneratoren enthält, über die sich die Meßkraft, die der Taster auf das Werkstück ausübt, für die Koordinatenrichtungen einstellen läßt. Das Verfahren kann vielmehr auch mit einem messenden Tastkopf durchgeführt werden, der "passive" Federn enthält, die eine der Auslenkung des Tasters proportionale Meßkraft in den Koordinatenrichtungen erzeugen. Die auf das Werkstück ausgeübte Meßkraft läßt sich in letzterem Falle anhand von Betrag und Richtung der Auslenkung des Tasters bzw. Taststifts berechnen und bei der Bestimmung der Tasterbiegung berücksichtigen.

Weitere Vorteile der Erfindung ergeben sich aus der nachstehenden Beschreibung von Ausführungsbeispielen anhand der Figuren 1-7 der beigefügten Zeichnungen. Hierbei sind

Figur 1     ein Blockschaltbild, das wesentliche Teile der Steuerung eines Koordinatenmeßgerätes zeigt, die nach einer ersten Verfahrensvariante der Erfindung arbeitet;

Figur 2     das Blockschaltbild eines zusätzlichen Funktionsmoduls für die Steuerung nach Figur 1;

Figur 3     eine vereinfachte schematische Darstellung des Bahnverlaufs für die Tastkugel eines nach dem erfindungsgemäßen Verfahrens scannenden Tastkopfes entlang einer Werkstückoberfläche;

Figur 4     ein Blockschaltbild, das wesentliche Teile der Steuerung eines Koordinatenmeßgerätes zeigt, die nach einer zweiten Verfahrensvariante der Erfindung arbeitet;

Figur 5     ein Blockschaltbild, das wesentliche Teile der Steuerung eines Koordinatenmeßgerätes zeigt, die nach einer dritten Verfahrensvariante der Erfindung arbeitet;

Figur 6     eine vereinfachte schematische Darstellung des Bahnverlaufs für die Tastkugel eines nach dem erfindungsgemäßen Verfahrens scannenden Tastkopfes entlang einer Werkstückoberfläche bei fein strukturierten Oberflächen;

Figur 7     eine vereinfachte schematische Darstellung des Bahnverlaufs für die Tastkugel eines nach dem erfindungsgemäßen Verfahrens scannenden Tastkopfes entlang einer Werkstückoberfläche bei größeren Abweichungen zwischen der Sollgeometrie und der Istgeometrie des Werkstücks.

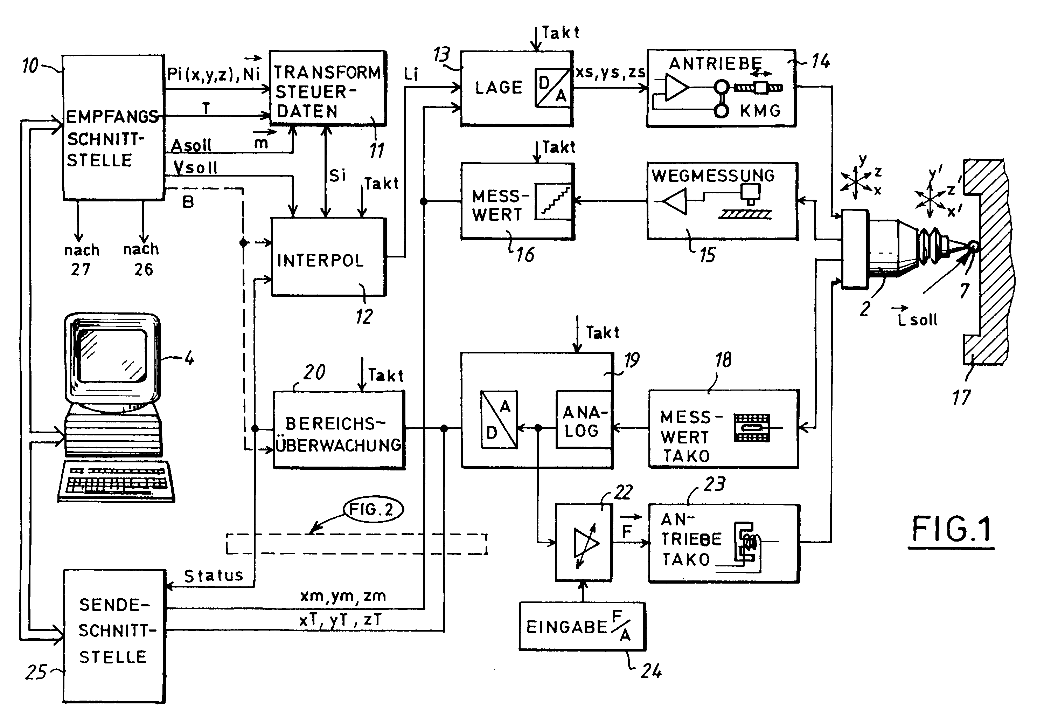

Die in Figur 1 mit ihren wesentlichen Funktionsbaugruppen beschriebene Steuerung eines Koordinatenmeßgerätes ist über die Empfangsschnittstelle (10) und die Sendeschnittstelle (25) mit dem Auswerterechner (4) des hier nicht in allen Einzelheiten dargestellten Koordinatenmeßgerätes verbunden. Ober die Eingangsschnittstelle (10) werden vom Rechner folgende Daten an die Steuerung übergeben:

a) Die Transformationsmatrix (T), die die Lage des Werkstückkoordinatensystems (WKS) im Maschinenkoordinaten(MKS) des Koordinatenmeßgerätes (KMG) beschreibt,
b) der Vektor $\vec{m}$, der die Lage des Mittelpunkts der verwendeten Tastkugel im Maschinenkoordinatensystem von einem Bezugspunkt am Tastkopf (2) des Koordinatenmeßgerätes beschreibt,
c) der Betrag der gewünschte Vorschubgeschwindigkeit $\vec{V}$soll, mit dem das Werkstück abgescannt werden soll,
d) Information über die gewünschte Betriebsart (B), sofern mehrere verschiedene Betriebsarten möglich sind,
e) der Wert der sogenannten "Eintauchtiefe" nach Betrag und Richtung, d.h. das Sollmaß der Tasterauslenkung $\vec{A}$soll, mit der das zu vermessende Werkstück abgefahren werden soll.

Außerdem werden über die Eingangsschnittstelle (10) die Informationen übergeben, die zur Beschreibung der von der Tastkugel abzufahrenden Sollkontur erforderlich sind. Das sind beispielsweise Punktefolge Pi (X, Y,Z) Gleichzeitig können auch, soweit vorhanden, die den einzelnen Punkten Pi (X,Y, Z) zugeordneten Normalvektoren (Ni) auf die Oberfläche des zu vermessenden Werkstücks (17) an dieser Stelle übergeben werden.

Das wichtigste Bauelement der Steuerung in Figur 1 sind ein oder mehrere Mikroprozessoren. Demzufolge sind einige der in Figur 1 gezeichneten Funktionsbaugruppen nicht in Hardware realisiert sondern Teil der Firmware dieser Mikroprozessoren. So verhält sich das beispielsweise auch mit der auf die Empfangsschnittstelle (10) folgende Funktionsbaugruppe (11) mit der Bezeichnung "Sollwertaufbereitung, Transformation". Die Funktionsbaugruppe (11) berechnet aus Steuerdaten wie der Sollage der Tastkugel (7) für den Antastvorgang $\vec{L}$soll, der gewünschten "Eintauchtiefe "$\vec{A}$soll, und den Punkten Pi (X,Y,Z) der Sollkontur die Bahndaten, mit denen die Tastkugel gegenüber dem Werkstück (17) verfahren wird. Diese Bahndaten (Si) werden durch eine Koordinatentransformation in das Steuersystem, d.h. das Maschinenkoordinatensystem (MKS) übertragen.

Der Funktionsbaugruppe "Sollwertaufbereitung, Transformation" ist die Funktionsbaugruppe (12) "Stützpunktgenerator/Interpolation" nachgeschaltet. In dieser Funktionsbaugruppe werden im steuereigenen Systemtakt die aufbereiteten diskreten abzufahrenden Bahnpunkte (Si) nach einem vorgegebenen Algorithmus, beispielsweise linear oder nach einem Spline-Algorithmus, interpoliert und als Lagesollwerte Li an den nachgeschalteten Lageregler (13) für die Antriebe der drei Meßachsen des Koordinatenmeßgerätes übergeben.

Der Stützpunktgenerator (12) empfängt außerdem direkt von der Eingangsschnittstelle (10) den Betrag der gewünschten Vorschubgeschwindigkeit $\vec{V}$soll, mit der das zu vermessende Werkstück abgefahren wird. Die im Lageregler (13) erzeugten Lagesollwerte werden anschließend analog gewandelt und als analoge Stellgrößen ($X_s$, $Y_s$, $Z_s$) an die drei Antriebe für die X-, Y- und Z-Achse des Koordinatenmeßgerätes übergeben. Der einfacheren Darstellung halber sind in Figur 1 die drei Antriebe in einer Antriebsbaugruppe (14) zusammengefaßt skizziert. Jeder der drei Antriebe des Koordinatenmeßgerätes besteht wie üblich aus einem Servoverstärker, einem Servomotor und den mechanischen Antriebsgliedern, mit deren Hilfe der Tastkopf (2) relativ zum Werkstück (17) verfahren wird.

Ebenfalls an den Lageregler (13) angeschlossen sind die mit (15) bezeichneten, den drei Meßachsen (X, Y, Z) zugeordneten Wegmeßsysteme des Koordinatenmeßgerätes und zwar über die Funktionsbaugruppe "Meßwerterfassung" (16). Die Meßsysteme des Koordinatenmeßgerätes bestehen wie üblich z.B. aus Maßstäben mit einer Gitterteilung, den Abtastköpfen für das Lesen der Maßstäbe und der nachgeordneten Elektronik für die Signalaufbereitung, Interpolation und Vor-Rückwärtszählung der von den Abtastköpfen gelieferten Signale. Die Baugruppe (16) "Meßwerterfasung Koordinatenmeßgerät" besorgt die zyklische Erfassung der Positionen ($X_m$, $X_m$, $Z_m$) des Tastkopfs im Maschinenkoordinatensystem und in der Kopplung an den Lageregler (13) wird der Positionsregelkreis für die drei Meßachsen des Koordinatenmeßgerätes geschlossen.

Die von der Funktionsbaugruppe (16) gelieferten Positionsmeßwerte ($X_m$, $Y_m$, $Z_m$) sind außerdem auf die Ausgangs- bzw. Sendeschnittstelle (25) der Steuerung gelegt und werden an den Rechner (4) rückgemeldet.

Die Steuerung nach Figur 1 enthält ebenfalls die Elektronik zur Weiterverarbeitung der von den Meßwertgebern im Tastkopf (2) abgegebenen Signale, die das Auslenken des Taststifts beim Kontakt der Tastkugel (7) mit dem Werkstück (17) in den drei Raumrichtungen beschreiben. Die entsprechende Funktionsbaugruppe ist mit (18) bezeichnet. Die von diesen Meßwertgebern kommenden und aufbereiteten analogen Lagesignale werden in der Funktionsbaugruppe (19) in Digitalwerte gewandelt. Diese digitalen Ausgangswerte ($X_T$, $X_T$, $Z_T$) sind ebenfalls auf die Sendeschnittstelle (25) gelegt und werden vom Rechner (4) zur Berechnung des Meßergebnisses benötigt. Gleichzeitig ist das digitale Signal betreffend die Tasterauslenkung einer Funktionsbaugruppe (20) "Überwachung und Fehlerbehandlung" zugeführt. Diese Funktionsbaugruppe (20) vergleicht die tatsächliche Tasterauslenkung ($X_T$, $X_T$, $Z_T$) mit der vorgewählten Eintauchtiefe $\vec{A}$ soll und löst beim Verlassen des zulässigen Bereiches (MR) der Tasterauslenkung eine Meldung an den Auswerterechner (4) aus. Gleichzeitig meldet die Funktionsbaugruppe (20) die Meßbereichsüberschreitung an den Stützpunktgenerator (12), damit dieser den Abtastvorgang abbricht und die Maschinenantriebe stillsetzt.

Die Steuerung nach Figur 1 enthält außerdem die Antriebe für die Auslenkung des Taststifts im Tastkopf. Die Antriebe für den Taststift im Tastkopf bestehen aus Kraftgeneratoren wie z.B. Linearmotoren oder Tauchspulenmagnete, die den Taststift auf ein vorgegebenes Signal hin in den drei Raumrichtungen X, Y und Z auslenken. Die entsprechende Funktionsbaugruppe (23) "Antriebe Tastkopf" erhält ihre Stellgröße $\vec{F}$ von der Funktionsbaugruppe (22) "Kraftregler". In der hier gewählten Betriebsart stellt der Kraftregler (22) eine der Auslenkung des Taststifts proportionale Gegenkraft ein. Da die in den Kraftregler implementierte Kraft-Wegkennlinie eine Gerätekonstante ist, ist über das Ausgangssignal der Baugruppe (19) auch die momentane auf das Werkstück ausgeübte Meßkraft bekannt und kann vom Rechner (4) zur Berechnung der Korrekturwerte benutzt werden, die eine Durchbiegung des Taststifts unter der eingestellten Meßkraft kompensieren.

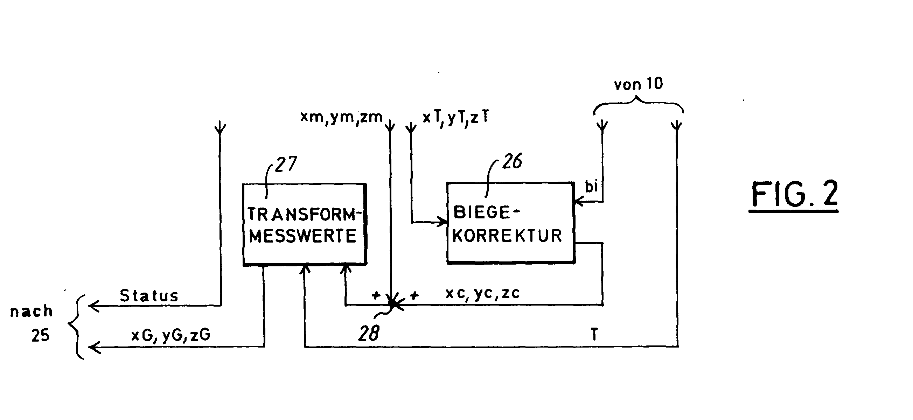

Letztere Funktion kann jedoch auch in die Steuerung selbst integriert sein. In diesem Falle ist das Blockschaltbild der Steuerung um die in Figur 2 dargestellten Komponenten zu ergänzen. Von der Empfangsschnittstelle (10) werden dann an eine Funktionsbaugruppe (26) "Biegekorrektur" der Steuerung zusätzlich die Parameter ($b_i$) übergeben, die das Biegeverhalten der gewählten Taststiftkonfiguration beschreiben.

In der in Figur 2 dargestellten Variante werden im Vergleich zu der Variante nach Figur 1 der Sendeschnittstelle (25) die um die Biegung korrigierten Daten der Taststiftauslenkung ($X_c$, $Y_c$, $Z_c$) nicht separat übergeben sondern an der mit (28) bezeichneten Stelle den Lage-Istwerten ($X_m$, $X_m$, $Z_m$) des Tastkopfs hinzugerechnet, die von der Baugruppe (16) "Meßwerterfassung Koordinatenmeßgerät" ausgegeben werden. Nach Addition der korrigierten Tasterdaten und der Lage-Istwerte liegen die Positionen des Tastkugelmittelpunkts im Maschinenkoordinatensystem vor. Deshalb enthält die Steuerung in dieser Variante eine weitere Funktionsbaugruppe (27) "Transformation" von der die Ist-Daten vom Maschinenkoordinatensystem (MKS) ins Werkstückkoordinatensystem (WKS) transformiert werden. Von der Funktionsbaugruppe (27) werden dann die Mittelpunktskoordinaten der Tastkugel an die Sendeschnittstelle (25) übergeben. Die Sendeschnittstelle (25) enthält den Meßwertspeicher der Steuerung, der die erfaßten Daten puffert bis sie vom Auswerterechner (4) abgeholt und dort weiterverarbeitet werden. Hier können beispielsweise 250 Meßwerte pro Sekunde gespeichert werden.

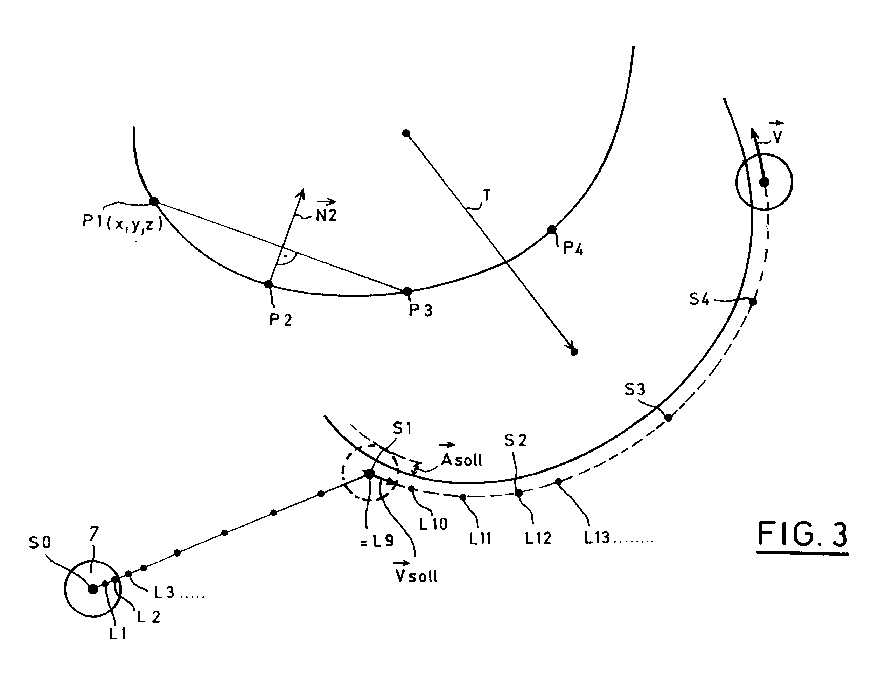

Die Arbeitsweise der vorstehend anhand von Figur 1 und 2 beschriebenen Steuerung wird nachfolgend unter Bezugnahme auf die schematische Darstellung nach Fig. 3 erläutert:

Nach der Übergabe der im Zusammenhang mit der Eingangsschnittstelle (10) beschriebenen Daten vom Rechner (4) an die Steuerung werden von der Funktionsbaugruppe (11) mehrere vorbereitende Berechnungen durchgeführt. Beispielsweise prüft die Funktionsbaugruppe (11) erst, ob die vorgegebene Eintauchtiefe, d.h. der Sollwert $\vec{A}$ soll der Tasterauslenkung durch eine Parallelverschiebung der Sollkurve in Richtung der vorgegebenen Eintauchrichtung (Tasterauslenkung) im zulässigen Bereich (MR) für die Tasterauslenkung gehalten werden kann. Bei flach gekrümmten Konturen des Werkstücks ist das möglich. In diesem Falle werden die Punkte Pi (X,Y,Z) der Sollkontur vom Werkstückkoordinatensystem (WKS) ins Maschinenkoordinatensystem (MKS) transformiert und anschließend an den Stützpunktgenerator (12) übergeben.

Läßt sich die Eintauchtiefe durch Parallelverschiebung der Bahn nicht im zulässigen Bereich (MR) halten, so muß eine äquidistante Bahn erzeugt werden. Dazu wird entweder zu jedem Punkt der Fläche des Werkstücks der Normalenvektor ($\vec{N}$i) benötigt. Diesen erhält die Funktionsbaugruppe (11) ebenfalls über die Eingangsschnittstelle (10) vom Rechner (4). Alternativ hierzu ist es möglich, die Funktionsbaugruppe (11) so zu programmieren, daß sie selbst aus jeweils drei benachbarten Punkten Pi (X,Y,Z) einen Vektor berechnet, der die Winkelhalbierende des aus den drei benachbarten Punkten aufgespannten Dreiecks bildet und in der aus den drei Punkten aufgespannten Ebene liegt. Der erste Richtungsvektor ($\vec{N}$2) kann berechnet werden, wenn drei aufeinanderfolgende Punkte ($P_1$, $P_2$, $P_3$) bekannt sind. Weiterhin kann der erste Stützpunkt (S1) im Maschinenkoordinatensystem mit Hilfe des Sollwertes $\vec{A}$soll für die Eintauchtiefe berechnet werden. Diese mathematischen und logischen Operationen führt die Funktionsbaugruppe "Sollwertaufbereitung, Transformation" (11) für alle übergebenen Punkte Pi (X,Y,Z) durch und gibt die so gewonnenen Bahndaten (Si) an den Stütztpunktgenerator (12).

In der vorstehend beschriebenen Betriebsart ist der Kraftregelkreis des Tastkopfes (2) über die Funktionsbaugruppen (18, 19, 22 und 23) geschlossen. Der Stützpunktgenerator (12) beginnt nun Stützpunkte (Li) von der momentanen Ist-Position (So) des Tastkopfs irgendwo außerhalb des Werkstücks (17) bis zur ersten Soll-Position (S1) der auf dem Werkstück (17) abzufahrenden Bahn interpolierend zu berechnen. Dies geschieht nach folgenden drei Regeln:

a) die Verbindung der beiden Punkte (So), (S1) also der Ist-Position zur ersten Soll-Position erfolgt durch eine Gerade,
b) die Abfolge der Stützpunkte ($L_1$-$L_9$) wird so gewählt, daß für jeden Zyklus des Maschinentakts ein Punkt vorliegt,
c) die Entfernung zwischen den Punkten (Li) wächst stetig an und zwar einer Funktion folgend, die von der Steuerung als "Beschleunigungsfunktion" vorgegeben ist.

Anschließend gibt der Stützpunktgenerator (12) die Stützpunkte als Lagesollwerte (Li) an den Lageregler (13) weiter, der zusammen mit den Antrieben (14), den Meßsystemen (15) der Meßachsen des Koordinatenmeßgerätes und der Funktionsbaugruppe Meßwerterfassung (16) den Lageregelkreis des Koordinatenmeßgerätes bildet. Hierdurch wird die Tastkugel (7) auf den Punkt (S1) an dem zu vermessenden Werkstück (17) hin verfahren, von dem an der Scanning-Vorgang gestartet wird. Hierbei legt sich die Tastkugel (7) am auslenkbaren Taststifts des Tastkopfes so an das Werkstück (17) an, daß die Tasterauslenkung der vorgewählten "Eintauchtiefe" $\vec{A}$soll entspricht.

Während des nun folgenden eigentlichen Meßvorganges fährt die Tastkugel (7) die vorberechnete Bahn auf der Werkstückoberfläche ab, wobei sie in dauerndem Kontakt mit der Werkstückoberfläche bleibt. Die Position der Tastkugel (7), die sich zusammensetzt aus der Position des Tastkopfes (2) und der Auslenkung des Taststifts, an dem die Tastkugel (7) befestigt ist, werden durch die Meßsysteme (15) und (18) laufend erfaßt und über die Sendschnittstelle (25) an den Rechner (4) des Koordinatenmeßgerätes weitergegeben. Aus diesen Werten berechnet der Rechner dann die Ist-Kontur des abgefahrenen Formelementes am Werkstück (17) bzw. Kenngrößen des Formelementes wie Mittelpunktslage, Durchmesser etc. bei Bohrungen.

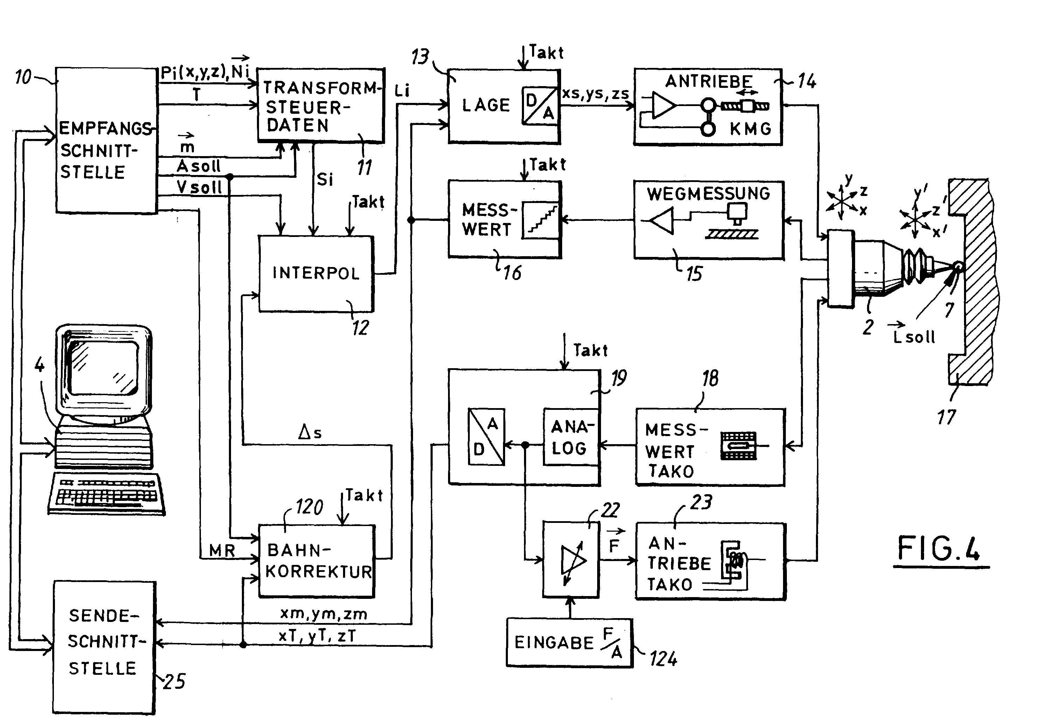

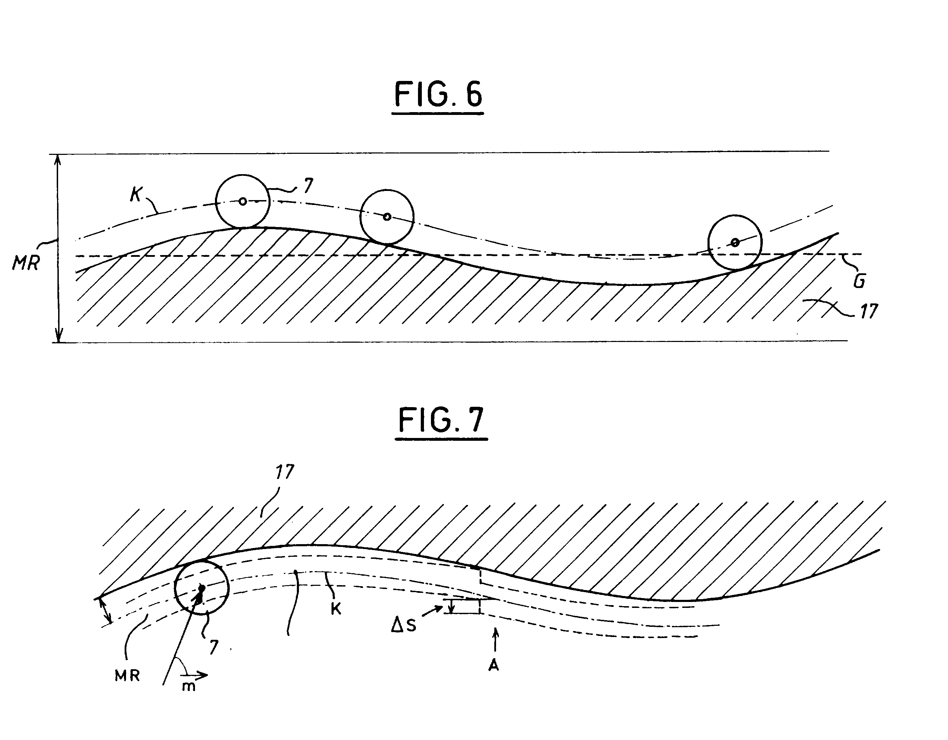

Beim Scannen der Werkstückoberfläche über größere Bereiche hinweg kann nun der Fall eintreten, daß infolge von Abweichungen zwischen der Sollgeometrie und der Ist-Geometrie des Werkstücks die Tasterauslenkung $\vec{A}$ist vorgegebene maximale Grenzen (MR) für die Tasterauslenkung erreichen und überschreiten würde. Dieser Fall ist in Figur 7 dargestellt. Dort ist die an der Werkstückoberfläche anliegende Tastkugel mit (7) bezeichnet und die für sie vorgegebene Sollbahn ist durch den zwischen den gestrichenen Linien verlaufenden Bereich MR repräsentiert der gleichzeitig die vorgegebenen Grenzen der zulässigen Tasterauslenkung kenntlich macht. Die Bahn (K), die jedoch der Mittelpunkt der Tastkugel (7) aufgrund der Ist-Geometrie des Werkstück (17) zurücklegt, verläuft anfangs innerhalb der vorgegebenen Grenzen der Tasterauslenkung, nähert sich hierbei jedoch immer mehr der Grenze der maximal zulässigen Tasterauslenkung und erreicht diese an der Stelle, die mit dem Pfeil A bezeichnet ist. Diese Situation wird von der Funktionsbaugruppe (20) (Figur 1) erkannt. Im Ausführungsbeispiel nach Figur 1 gibt die Funktionsbaugruppe (20) in dieser Situation eine Fehlermeldung an die Sendeschnittstelle (25) und die Funktionsbaugruppe (12), die daraufhin das Koordinatenmeßgerät stillgesetzt. Im abgewandelten Ausführungsbeispiel nach Figur 4 hingegen ist anstelle der Funktionsbaugruppe (20) eine Funktionsbaugruppe (120) "Bahnkorrektur" vorgesehen, von der die gesteuerte Sollbahn korrigiert wird. Hierbei veranlaßt die Funktionsbaugruppe (120) den Stützpunktgenerator (12) die berechnete Sollbahn, auf der die Tastkugel gesteuert wird, durch Aufschalten einer Störgröße um einen konstanten Betrag ΔS von der Werkstückoberfläche wegzuversetzen. Anschließend befindet sich die Tasterauslenkung wieder im zulässigen Bereich und der Scan-Vorgang wird fortgesetzt.

Die übrigen Baugruppen im Ausführungsbeispiel nach Figur 4 sind im Vergleich zu dem in Figur 1 gleich geblieben und werden mit Ausnahme des Kraftreglers (22) an dieser Stelle deshalb nicht nochmals erläutert.

Der Kraftregler (22) enthält für jede der drei Antriebsrichtungen für die Tasterauslenkung eine geschlossene Regelschleife, von der die Proportionalität zwischen der vom Antrieb (23) eingestellten Kraft ($\vec{F}$)

und der Tasterauslenkung $\vec{A}$ist hergestellt wird. Die Kennlinien werden für alle drei Raumrichtungen so eingestellt, daß sich um die Taster-Nullage Kugelschalen gleicher Kraft ergeben. Damit können bei bekannter Tasterauslenkung $\vec{A}$ist mit Hilfe der sich aus der Kennlinie ergebenden Federkonstante F/A (= Gerätekonstante) auch die für die Tasterbiegungskorrektur einzusetzenden Kräfte $\vec{F}$ist direkt berechnet werden. Die Symmetrie der Kennlinien in den drei Achsen kann durch Scannen eines Rundheitsnormales, z.B. eines Lehrringes im Sinne eines Kreisformtestes geprüft werden. Die Eingabe der Gerätekonstante F/A erfolgt beispielsweise mit Hilfe eines programmierbaren Digital-Analog-Wandlers (124).

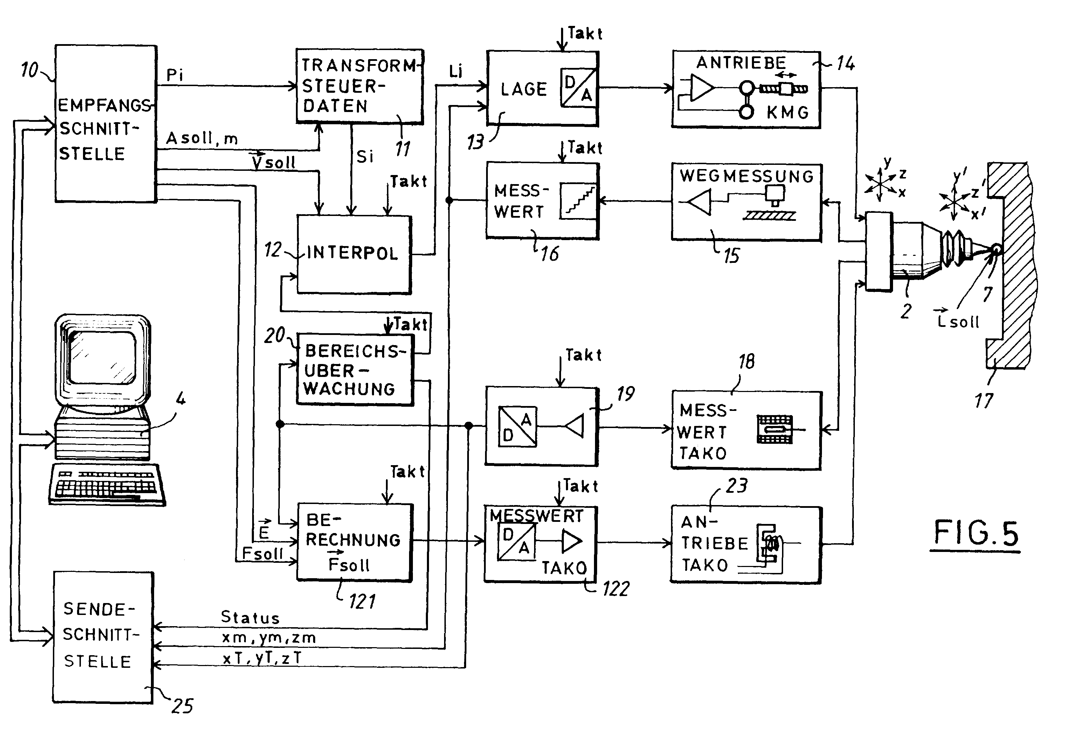

Bei der beschriebenen Variante der Meßkraftaufschaltung steht für Tasterauslenkungen während des Abfahrens der vorgegebenen Sollkontur auf jeden Fall weniger als der halbe Meßbereich des Tastkopfs (2) zur Verfügung, da der Taststift nicht in Richtung auf das Werkstück vorausgelenkt werden kann. Letzteres ist allerdings bei der im Zusammenhang mit Figur 5 später noch beschriebenen Ausführungsform der Fall.

An dieser Stelle soll noch erwähnt werden, daß es auch möglich ist, anstelle von aktiven Antrieben (23) im Tastkopf (2) passive Federn zu verwenden, bzw. einen entsprechend aufgebauten Tastkopf im Zusammenhang mit der beschriebenen Steuerung zu betreiben. In dem Falle stellt sich die gewünschte Meßkraft ($\vec{F}$) infolge der aktuellen Taststiftauslenkung $\vec{A}$ist selbsttätig ein und auf den Kraftregler (22) kann ebenfalls verzichtet werden.

Ein weiteres, im Vergleich zu Figur 1 leicht abgewandeltes Ausführungsbeispiel für die Steuerung ist in Figur 5 dargestellt. In diesem Ausführungsbeispiel wird davon ausgegangen, daß die Werkstückgeometrie durch Punktefolgen ($P_i$) und Schnittebenen (E) beschrieben werden kann. In diesem Falle ist es möglich, die Meßrichtung, d.h. die Richtung in der der Taststift bei Anlage mit dem Werkstück ausgelenkt wird, durch einen Vektor ($\vec{V}_E$) zu beschreiben, der in der Schnittebene liegt und senkrecht zur Vorschubrichtung auf die Werkstückoberfläche gerichtet ist. Für diesen Fall besitzt das Ausführungsbeispiels nach Figur 5 eine Funktionsbaugruppe (121) für die Berechnung des Sollkraft-Vektors $\vec{F}$soll aus den von der Empfangsschnittstelle (10) empfangenen Daten, von denen die Lage der Meßrichtung, d.h. der Schnittebene (E) beschrieben wird. Die Funktionsbaugruppe (121) ist ebenfalls an die Baugruppe (19) angeschlossen und bekommt von dort die Ist-Lage der Tasterauslenkung ($X_T$, $X_T$, $Z_T$) rückgemeldet.

Anstelle des Kraftreglers (22) im Ausführungsbeispiel nach Figur 1, der die auf die Antriebe (23) für den Taststift im Tastkopf (2) aufzuschaltende Meßkraft aus der konstanten Kraft/Wegkennlinie berechnet, ist im Ausführungsbeispiel nach Figur 5 eine Funktionsbaugruppe (122) vorgesehen, von der die Antriebe (23) im Tastkopf entsprechend dem von der Funktionsbaugruppe (121) berechneten Meßkraft-Vektor $\vec{F}$soll, d.h. mit der von der Empfangsschnittstelle (10) empfangenen vorgewählten Meßkraft $\vec{F}$soll in der aus der Schnittebene (E) berechneten Richtung angesteuert werden.

Um sicherzustellen, daß die Tasterauslenkung $\vec{A}$ist in der Schnittebene (E), d.h. der vorgegebenen Meßrichtung bleibt, wird durch die Funktionsbaugruppe (121) die Auslenkung des Taststifts in andere als die für den Sollkraft-Vektor $\vec{F}$soll berechnete Richtungen elektronisch geklemmt, d.h. bei Tasterauslenkungen in diese Richtungen werden die Antriebe (23) im Tastkopf (2) mit hohen Rückstellkräften beaufschlagt. Hierdurch kann bei Werkstückkonturen mit "Hanglage", d.h. dort, wo die Schnittebene (E) der Meßrichtung nicht senkrecht auf der Werkstückoberfläche steht, die gewünschte Bahn der Tastkugel (7) auf der Werkstückoberfläche gut eingehalten werden, ohne daß unzulässig große Kräfte auftreten wie es der Fall wäre, wenn der Taststift in bestimmten Richtungen (X, Y, Z) mechanisch geklemmt wäre.

Da bei diesem Ausführungsbeispiel nach Fig. 5 die Meßkraft ($\vec{F}$) über den vollen Auslenkungsbereich des Taststifts in Meßrichtung konstant bleibt, somit der zulässige Meßbereich (MR) für die Tasterauslenkung voll ausgenutzt wird, kann der Tastkopf (2) mit höheren Vorschubgeschwindigkeiten an der Werkstückkontur entlanggefahren werden, verglichen mit dem in Figur 1 dargestellten Ausführungsbeispiel.

Es ist deshalb auch möglich, wie in Figur 6 dargestellt detailliertere Geometrien der Werkstückoberfläche abzufahren, ohne daß diese detaillierten Geometrien selbst als Sollbahnen vorgegeben werden müssen, entlang der der Tastkopf in den drei Maschinenachsen des Koordinatenmeßgerätes verfahren wird. Vielmehr kann für die Sollbahn (K) ein Ausgleichselement, beispielsweise eine Gerade (G) vorgegeben werden, wenn die Abweichungen der Ist-Geometrie zu diesem Ausgleichselement innerhalb des zulässigen Arbeits- bzw. Meßbereiches (MR) für die Taststiftauslenkung liegen. Da die Feinbewegungen dann ausschließlich vom Taststift durchgeführt werden und dessen Dynamik gewöhnlich besser ist als die der beweglichen Massen des Koordinatenmeßgerätes, können dann bedeutend höhere Vorschubgeschwindigkeiten erzielt werden.

**Patentansprüche**

1. Verfahren zur Messung von Formelementen beliebiger räumlicher Orientierung an Werkstücken (17) auf einem Koordinatenmeßgerät mit einem messenden Tastkopf (2), der

   - einen auslenkbaren Taster mit einer Tastkugel (7) aufweist
   - Meßwertgeber (18) besitzt, die den Betrag der Tasterauslenkung ($\vec{A}$ist) in den Koordinatenrichtungen (X', Y', Z') angeben

- Meßkraftgeneratoren (23) enthält, über die sich die Meßkraft ($\vec{F}$), die der Taster auf das Werkstück (17) ausübt, für die Koordinatenrichtungen (X', Y', Z') einstellen läßt, oder Federn enthält, die eine der Auslenkung des Tasters proportionale Meßkraft in den Koordinatenrichtungen erzeugen,

wobei das Verfahren folgende Verfahrensschritte umfaßt:

- von einem Rechner (4) des Koordinatenmeßgerätes werden an eine Steuerung des Koordinatenmeßgerätes Daten Pi (X, Y, Z) übergeben, die die Sollage und die Sollkontur des zu vermessenden Formelements beschreiben,
- aus den Daten leitet die Steuerung Bahndaten (Li) ab, entlang der sie den Tastkopf (2) des Koordinatenmeßgerätes so gegenüber der Sollkontur versetzt verfährt, daß die Tastkugel (7) am Taster in Anlage mit dem Werkstück (17) und die Tasterauslenkung ($\vec{A}$ist) im zulässigen Meßbereich (MR) des Tastkopfs (2) bleibt,
- die Steuerung stellt die Kräfte der einzelnen Meßkraftgeneratoren (23) bzw. eine vorgegebene Tasterauslenkung ($\vec{A}$soll) entsprechend der Sollkontur so ein, daß die resultierende Gesamtmeßkraft ($\vec{F}$soll) an jeder Stelle auf die Sollkontur gerichtet ist,
- aus den Signalen der Meßwertgeber (18) werden die Abweichungen der Ist-Kontur des Formelements von der Sollkontur bzw. Kenngrößen wie Mittelpunktslage, Durchmesser etc. des Formelements berechnet,

gekennzeichnet dadurch, daß

- während des Meßvorganges die Stellung des Tasters im Meßbereich (MR) des Tastkopfes (2) überwacht wird und ein kontinuierliches Auswandern des Tasters in Richtung auf den Rand des Meßbereichs (MR) durch Aufschalten einer Störgröße auf die Bahndaten kompensiert wird, die einem konstanten Versatz ($\Delta$ S) in entgegengesetzter Richtung entspricht.

2. Verfahren nach Anspruch 1, dadurch gekennzeichnet, daß aus den für jeden Meßpunkt bekannten Werten für Betrag und Richtung der Gesamtmeßkraft ($\vec{F}$ ist) bzw. der Tasterauslenkung ($\vec{A}$ist) Korrekturwerte berechnet werden, die die Tasterbiegung nach Betrag und Richtung beschreiben, und daß diese Korrekturwerte ($X_C$, $Y_C$, $Z_C$) bei der Berechnung der Ist-Kontur ($X_G$, $Y_G$, $Z_G$) des Formelements mit berücksichtigt werden.

3. Verfahren nach Anspruch 1, dadurch gekennzeichnet, daß eine Einrichtung (121) vorgesehen ist, mit der sich der Taster bezüglich der Auslenkung in vorwählbaren Koordinatenrichtungen elektronisch klemmen läßt.

4. Verfahren nach Anspruch 1, dadurch gekennzeichnet, daß der Betrag der resultierenden Meßkraft ($\vec{F}$) während des Meßvorganges konstant gehalten wird.

5. Verfahren nach Anspruch 1, dadurch gekennzeichnet, daß die während des Meßvorgangs auftretenden dynamischen Beschleunigungskräfte und das Biegeverhalten der verfahrbaren Teile des Koordinatenmeßgerätes bei der Berechnung der Ist-Kontur des Formelements aus den Signalen der Meßwertgeber (18) des Tastkopfes (2) mit berücksichtigt werden.

6. Verfahren nach Anspruch 1, dadurch gekennzeichnet, daß die Solllage des zu vermessenden Formelements vor dem Abfahren seiner Kontur durch Antasten weniger Punkte der Kontur verifiziert wird und die Bahndaten entsprechend dem Ergebnis der Verifizierung bei Bedarf angepaßt werden.

7. Koordinatenmeßgerät mit einem Rechnev und einer Steuerung, die folgende Funktionsbaugruppen enthält:

- Tastkopf (2) umfassend

    - einen auslenkbaren Taster mit einer Tastkugel (7) am Taster
    - Meßwertgeber (18), die den Betrag der Tasterauslenkung ($\vec{A}$ist) in den Koordinatenrichtungen (X', Y', Z') angeben

- Lageregler (13) für Antriebe (14) des Koordinatenmeßgerätes in den Meßachsen (X, Y, Z), wobei mit Hilfe der Antriebe (14) der Tastkopf (2) relativ zum Werkstück (17) verfahren werden kann
- Meßwerterfassungseinrichtungen (16) für die von den Wegmeßsystemen (15) in den Meßachsen gelieferten Signale, wobei die von den Wegmeßsystemen (15) gelieferten Signale den Positionen des Tastkopfes (2) entsprechen,
- Meßwerterfassungseinrichtungen (19) für die von den Meßwertgebern (18) im Tastkopf kommenden Signale entsprechend der Auslenkung des Tasters im Tastkopf
- eine erste Funktionsbaugruppe (11), die aus von dem Rechner (4) übergebenen Daten Pi (X, Y, Z), von denen die Sollform des zu vermessenden Werkstücks (17) beschrieben wird, die vom Tastkopf (2) während eines Meßvorganges abzufahrende Bahn (Si) berechnet, wobei diese Bahn gegenüber der Sollform des Werkstücks versetzt ist,

- einem Interpolator, der aus den Bahnpunkten (Si) die Lagesollwerte (Li) für den Lageregler berechnet,

gekennzeichnet durch

- eine zweite Funktionsbaugruppe (120), die während des Meßvorganges die Stellung des Tasters im Meßbereich (MR) des Tastkopfes überwacht und die zur Kompensation des kontinuierlichen Auswanderns des Tasters in Richtung auf den Rand des Meßbereichs (MR) das Aufschalten einer Störgröße auf die Bahndaten veranlaßt, die einem konstanten Versatz ($\Delta$ S) in entgegengesetzter Richtung entspricht.

8. Koordinatenmeßgerät nach Anspruch 7, wobei die Steuerung ferner enthält:

- eine dritte Funktionsbaugruppe zur Berechnung der Tasterbiegung aus der Meßkraft ($\vec{F}$ ist) oder der dazu proportionalen Tasterauslenkung ($\vec{A}$ist).

9. Koordinatenmeßgerät nach Anspruch 7, wobei die Steuerung ferner enthält:

- Kraftregler (20) zur Einstellung der von Kraftgeneratoren im Tastkopf (2) des Koordinatenmeßgerätes auf das Werkstück (17) ausgeübten Meßkraft, wobei sich über die Kraftgeneratoren für die Koordinatenrichtungen (X', Y', Z') die Meßkraft ($\vec{F}$) einstellen läßt, die der Taster auf das Werkstück (17) ausübt.

**Claims**

1. A method of measuring elements of a workpiece in any desired orientation in space, using a coordinate measuring machine having a measuring probe head (2) which:

- comprises a deflectable probe with a probe ball (7),
- has measurement means (18) which indicate the amount of probe deflection ($\vec{A}_{ist}$) in the coordinate directions (X', Y', Z'), and
- contains measurement-force generators (23) by which the measurement force ($\vec{F}$) which the probe exerts on the workpiece (17) can be adjusted for the coordinate directions (X', Y', Z') or contains springs which produce in the coordinate directions a measurement force which is proportional to the deflection of the probe,

wherein said method comprises the following method steps:

- a computer (4) of the coordinate measuring machine transmits to a control system of the coordinate measuring machine, data Pi (X, Y, Z) which describe the desired location and the desired contour of said element to be measured
- from the data, the control system derives path data (Li) along which the probe head (2) is moved in such a manner with respect to the desired contour that the probe ball (7) on the probe remains applied against the workpiece (17) and the probe deflection ($\vec{A}_{ist}$) remains within the permissible measurement range (MR) of the probe head (2);
- the control system so adjusts the forces of the individual measurement-force generators (23) or a predetermined probe deflection ($\vec{A}_{soll}$) corresponding to the desired contour in such manner that the resultant total measurement force ($\vec{F}_{soll}$) is always applied towards the desired contour
- from the signals of the measurement means (18), deviations of the actual contour of the element from the desired contour or characteristics such as location of center point, diameter, etc. of the element are calculated,

characterized by the fact that:

- during the measurement process the position of the probe is monitored within the measurement range (MR) of the probe head (2) and a continuous migration of the probe in the direction towards the edge of the measurement range (MR) is compensated by applying a disturbance on the path data, which corresponds to a constant offset ($\Delta$ S) in the opposite direction.

2. A method according to claim 1, characterized by the fact that from predetermined values of magnitude and direction of total measurement force ($\vec{F}_{ist}$) known for each measuremnt point or probe deflection ($\vec{A}_{ist}$) are used for calculating correction values which describe the bending of the probe in magnitude and direction, and that these correction values ($X_c$, $Y_c$, $Z_c$) are taken into account in the calculation of the actual contour ($X_G$, $Y_G$, $Z_G$) of the element.

3. A method according to claim 1, characterized by the fact that means (121) are provided by which the probe can be electronically clamped for desired coordinate directions.

4. A method according to claim 1, characterized by the fact that the amount of the resultant measurement

force ($\vec{F}$) is maintained constant during the measurement process.

5. A method according to claim 1, characterized by the fact that the dynamic acceleration forces which occur during the measuring process and the bending behavior of the movable parts of the coordinate-measuring machine are taken into account in the calculation of the actual contour of the element from the signals of the measurement means (18) in the probe head (2).

6. A method according to claim 1, characterized by the fact that the desired position of the element to be measured is verified before its contour is measured, by individual measurements at a few spaced points along the contour and the path data being adapted to the result of the verification if necessary.

7. A coordinate measuring device having a computer and a control system comprising:

   - a probe head (2) comprising:

     - a deflectable probe with a probe ball (7)
     - measurement means (18) which indicate the amount of probe deflection ($\vec{A}_{ist}$) in the coordinate directions (X', Y', Z')

   - a position controller (13) for the drives (14) of the coordinate measurement machine in the measurement axes, wherein with the aid of the drives (14) the probe head (2) can be moved with respect to the workpiece
   - measured-values detection means (16) adapted to respond to signals from position-measurement systems (15) in the measurement axes, wherein the signals provided by the position-measurement systems (15) correspond to the positions of the probe head (2),
   - measured-value detection means (19) adapted to respond to the signals from measurement means (18) in the probe head according to the deflection of the probe in the probe head (2);
   - a first function unit (11) which from data Pi (X, Y, Z) delivered by the computer (4), from which the desired contour of a workpiece (17) to be measured is described, calculates the path (Si) along which the probe head (2) is to be moved during a measurement process, said path being offset with respect to the desired contour of the workpiece, and
   - an interpolator which is adapted to calculate, from the path points (Si), desired-position values (Li) for the position controller,

   characterized by the fact that:

   - a second function unit (120), which monitors during the measurement process the position of the probe within the measurement range (MR) of the probe head (2) and which applies a disturbance on the path data, the disturbance corresponds to a constant offset ($\Delta S$) in the opposite direction, to compensate a continuous migration of the probe in the direction towards the edge of the measurement range.

8. A coordinate measuring device according to claim 7, wherein the control system additionally contains:

   - a third function unit adapted to calculate probe bending from the measurement force ($\vec{F}_{ist}$) or from the deflection of the probe ($\vec{A}_{ist}$) proportional thereto.

9. Coordinate measuring device according to claim 7, in which the control system additionally contains:

   - a force regulator (20) for adjusting the measurement force exerted on a workpiece (17) by force generators in the probe head (2) of the coordinate measuring machine wherein the force ($\vec{F}$) which is converted in the coordinate directions (X', Y', Z') towards the workpiece can be adjusted by the force generators.

**Revendications**

1. Procédé destiné à déterminer des éléments profilés, orientés indifféremment sur des pièces d'usinage, au moyen d'une machine de mesure munie d'une tête de palpage mesurante (2) qui

   - présente un palpeur orientable pourvu d'une bille de palpage (7)
   - possède des capteurs de valeurs de mesure (18) qui indiquent l'ampleur de la déviation du palpeur ($\vec{}_{Aréel}$) dans les axes de coordonnées (X', Y', Z')
   - comporte des générateurs (23) qui permettent de régler la force de mesure ($\vec{}_{F}$) que le palpeur exerce sur la pièce (17) dans les axes de coordonnées (X', Y', Z'), ou bien des ressorts qui induisent une force de mesure proportionnelle à la déviation du palpeur dans les axes de coordonnées,

   tel que ledit procédé englobe les opérations suivantes :

   - les données Pi (X, Y, Z) qui définissent le positionnement prescrit et le contour nominal de l'élément profilé à contrôler sont transmises d'un calculateur (4) de la machine de mesure à une commande de ladite machine,

- la commande dérive de ces données des informations relatives à la trajectoire (Li) selon laquelle elle déplace la tête de palpage (2) de la machine de mesure en décalage par rapport au contour prescrit, afin que la bille de palpage (7) au bout du palpeur reste en contact avec la pièce (17) et la déviation du palpeur ($\rightarrow_{Aréel}$) à l'intérieur de la plage de mesure permise (MR) de la tête de palpage (2),
- la commande ajuste les forces des divers générateurs (23) ou une certaine déviation du palpeur donnée ($\rightarrow_{Anominal}$) en fonction du contour prescrit, de sorte que la force de mesure globale résultante ($\rightarrow_{Fnominal}$) est appliquée en tout point du contour prescrit,
- les signaux des capteurs de valeurs de mesure (18) servent à calculer les écarts du contour réel de l'élément profilé par rapport au contour prescrit et aux grandeurs caractéristiques, tels que la localisation du centre, le diamètre de l'élément profilé,

caractérisé en ce que

- la position du palpeur est surveillée dans la plage de mesure (MR) de la tête de palpage (2) durant le cycle de mesure et qu'une dérive continue du palpeur en marge de la plage de mesure (MR) est compensée par l'implication d'une grandeur de perturbation au niveau des coordonnées de la trajectoire qui se traduit par un décalage constant (AS) dans le sens opposé.

**2.** Procédé selon la revendication 1, caractérisé en ce que des valeurs de correction qui décrivent la flexion du palpeur en termes d'ampleur et de direction sont calculées à partir des valeurs connues en chaque point de mesure quant à l'intensité et au sens de la force de mesure globale ($\rightarrow_{Fréel}$) ou de la déviation du palpeur ($\rightarrow_{Aréel}$) et que ces valeurs de correction ($X_C$, $Y_C$, $Z_C$) sont prises en considération lors du calcul du contour effectif ($X_G$, $Y_G$, $Z_G$) de l'élément profilé.

**3.** Procédé selon la revendication 1, caractérisé en ce qu'un dispositif (121) est prévu pour verrouiller électroniquement le palpeur selon sa déviation dans des axes de coordonnées présélectionnés.

**4.** Procédé selon la revendication 1, caractérisé en ce que l'intensité de la force de mesure résultante ($\rightarrow_{Fréel}$) est maintenue constante durant la mesure.

**5.** Procédé selon la revendication 1, caractérisé en ce que les forces d'accélération dynamiques qui apparaissent durant la mesure et le comportement à la flexion des pièces mobiles de la machine de mesure sont pris en compte au moment où le contour réel de l'élément profilé est calculé à partir des signaux transmis par les capteurs de valeurs de mesure (18) logés dans la tête de palpage (2).

**6.** Procédé selon la revendication 1, caractérisé en ce que le positionnement prescrit de l'élément profilé à contrôler est vérifié par le palpage de quelques points du contour avant d'entamer son cheminement et que les coordonnées de la trajectoire sont corrigées d'après les résultats de cette vérification, le cas échéant.

**7.** Machine de mesure à coordonnées munie d'un calculateur et d'une commande qui comprend les modules fonctionnels suivants :

- une tête de palpage (2) qui englobe

  - un palpeur orientable prolongé d'une bille de palpage (7)
  - des capteurs de valeurs de mesure (18) qui indiquent l'ampleur de la déviation du palpeur ($\rightarrow_{Aréel}$) dans les axes de coordonnées (X', Y', Z')

- des régulateurs de position (13) des actionneurs (14) de la machine de mesure dans les axes de mesure (X, Y, Z), tels que la tête de palpage (2) peut être déplacée par rapport à la pièce à l'aide des actionneurs (14),
- des dispositifs de saisie des valeurs de mesure (16) destinés à enregistrer les signaux fournis par les systèmes de mesure de trajet (15) aux axes de mesure, tels que les signaux délivrés par les systèmes de mesure de trajet (15) correspondent aux positions de la tête de palpage (2),
- des dispositifs de saisie des valeurs de mesure (16) destinés à enregistrer les signaux transmis des capteurs (18) logés dans la tête de palpage selon la déviation de son palpeur,
- un premier module fonctionnel (11) qui calcule la trajectoire (Si) à parcourir par la tête de palpage (2) durant le cycle de mesure à partir des données Pi (X, Y, Z) qui sont communiquées par le calculateur et définissent le profil prescrit de la pièce à contrôler (17), de sorte que cette trajectoire est décalée par rapport à la forme nominale de la pièce.
- un interpolateur qui évalue les valeurs nominales (Li) du régulateur de position à partir des points de la trajectoire (Si),

caractérisé par

- un deuxième module fonctionnel (120) qui surveille la position du palpeur dans la plage de mesure (MR) de la tête de palpage pendant la mesure et qui induit la compensation de toute dérive continue du palpeur en marge de la plage de mesure (MR), en impliquant une grandeur de perturbation au niveau des coordonnées de la trajectoire qui se traduit par un décalage constant ($\Delta$S) dans le sens opposé.

8. Machine de mesure à coordonnées selon la revendication 7, caractérisée en ce que la commande sollicite également

   - un troisième module fonctionnel pour calculer la flexion du palpeur à partir de la force de mesure ($\rightarrow$F$_{réel}$) ou de la déviation du palpeur qui lui est proportionnelle ($\rightarrow$A$_{réel}$).

9. Machine de mesure à coordonnées selon la revendication 7, caractérisée en ce que la commande sollicite également

   - des régulateurs de force (2) prévus pour ajuster la force de mesure que les générateurs logés dans la tête de palpage (2) de la machine de mesure à coordonnées impriment sur la pièce (17), tels qu'il est possible de faire varier la force de mesure ($\rightarrow$F) exercée par le palpeur sur la pièce (17) dans les axes de coordonnées (X', Y', Z') au moyen des générateurs.

**FIG.1**

EP 0 569 694 B1

FIG.2

von 10

bi

BIEGE-KORREKTUR

26

$x_T, y_T, z_T$

$x_c, y_c, z_c$

T

$x_m, y_m, z_m$

+

+

28

TRANSFORM-MESSWERTE

27

Status

$x_G, y_G, z_G$

nach 25

14

FIG. 3

EP 0 569 694 B1

FIG.4

EP 0 569 694 B1

FIG.5

## FIG. 6

EP 0 569 694 B1

## FIG. 7